Europäisches Patentamt

European Patent Office

Office européen des brevets

(19)

(11) Veröffentlichungsnummer: **0 012 826**
**B1**

(12) **EUROPÄISCHE PATENTSCHRIFT**

(45) Veröffentlichungstag der Patentschrift:
09.05.84

(51) Int. Cl.³: **B 65 H 81/06,** B 29 D 3/00,
B 29 D 23/12, B 29 C 27/26

(21) Anmeldenummer: **79104417.5**

(22) Anmeldetag: **09.11.79**

(54) Verfahren zum Herstellen von länglichen, insbesondere rohrförmigen Wickelkörpern.

(30) Priorität: **22.12.78 DE 2855638**

(43) Veröffentlichungstag der Anmeldung:
**09.07.80 Patentblatt 80/14**

(45) Bekanntmachung des Hinweises auf die Patenterteilung:
**09.05.84 Patentblatt 84/19**

(84) Benannte Vertragsstaaten:
**FR GB IT**

(56) Entgegenhaltungen:
**DD - A - 61 340**
**DE - B - 1 043 439**
**DE - B - 1 192 394**
**GB - A - 1 158 654**
**US - A - 1 879 124**
**US - A - 4 125 423**

**W. EHLERS und H. LAU "Kabel-Herstellung", 1956,
SPRINGER VERLAG, Berlin, Göttingen, Heidelberg**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Brunsch, Klaus, Asternweg 11, D-8190 Weidach
bei Wolfratshausen (DE)**
Erfinder: **Schindler, Rudolf, Rudolf-Diesel-Strasse 23,
D-8012 Ottobrunn (DE)**
Erfinder: **Bongers, Bernd, Nelkenweg 2,
D-8016 Heimstetten (DE)**
Erfinder: **Schulz, Ralf-Thilo, An der Au 9,
D-8222 Ruhpolding (DE)**

## Beschreibung

Die Erfindung bezieht sich auf ein Verfahren zum Herstellen von länglichen, insbesondere rohrförmigen, mit mindestens an einem Ende angeordneten Anschlusselementen versehenen Wickelkörpern aus Faserverbundwerkstoff, bei dem die Wickelkörper dadurch hergestellt werden, dass die Anschlusselemente mit einem Innenkern verbunden und gemeinsam mit diesem mit Faserlagen bewickelt werden.

Bei bekannten Herstellungsverfahren dieser Art (DE-B-2146 783) wird der Innenkern, der gewöhnlich ein verlorener Schaumstoffkern ist, beidseitig mit Anschlusselementen versehen und dann gemeinsam mit Teilbereichen der Anschlusselemente hin- und hergehend mit einer, zumeist aber mit mehreren Faserlagen in von Faserlage zu Faserlage wechselnder Faseranordnung bewickelt, so dass nach dem Aushärten des Faserverbundwerkstoffs ein Wickelkörper mit integral an den Faserlagen verankerten Anschlusselementen entsteht. Eine solche Einzelfertigung derartiger Wickelkörper ist sehr aufwendig und vor allem bei grösseren Stückzahlen problematisch.

Der Erfindung liegt die Aufgabe zugrunde, das Herstellungsverfahren der eingangs erwähnten Art so auszugestalten, dass solche mit Anschlusselementen versehene Wickelkörper problemlos auch in grösseren Stückzahlen kostengünstig herzustellen sind.

Zur Lösung dieser Aufgabe ist das Verfahren der beanspruchten Art erfindungsgemäss dadurch gekennzeichnet, dass zumindest jeweils zwei, mit je einem Innenkern versehene Anschlusselemente spiegelbildlich miteinander verbunden sind, die über die Anschlusselemente verbundenen Innenkerne in einem Arbeitsgang bewickelt werden und anschliessend eine Trennung in einzelne Wickelkörper erfolgt.

Mit dem erfindungsgemässen Verfahren wird eine beliebige Vielzahl von mit integral angeformten Anschlusselementen versehenen Wickelkörpern kontinuierlich hintereinander dadurch hergestellt, dass die einzelnen Innenkerne über spiegelbildlich als Doppelelemente ausgestaltete Anschlusselemente zu einem ohne zusätzliche Verbindungen für eine Bewicklung ausreichend stabilen, abwechselnd aus Innenkernen und Doppelelementen bestehenden Endlosstrang entsprechender Länge zusammengefügt werden, der dann mit der oder den Faserlagen unter Einschluss der Anschlusselemente durchlaufend mechanisiert in einer herkömmlichen Wickelmaschinen bewickelt und nach dem Aushärten des Faserverbundwerkstoffs durch Trennung im Bereich der Symmetrieebene der Anschlusselemente in die einzelnen Wickelkörper zerteilt wird. Aufgrund des geringen zeitlichen und maschinellen Aufwandes eignet sich das erfindungsgemässe Verfahren daher in hervorragender Weise für eine kostengünstige Massenfertigung von Wickelkörpern mit integral an den Faserlagen verankerten Anschlusselementen.

Das kontinuierliche Bewickeln eines durchlaufenden Endlosstrangs, der aus wiederverwendbaren, lösbar miteinander verbundenen Kernabschnitten besteht und beim Passieren einer Wickelmaschine mit Faserlagen unterschiedlicher Faseranordnung bewickelt wird, ist an sich bekannt (US-A-4 125 423). Die so entstehenden Wickelkörper sind jedoch reine Faserverbundbauteile, an die erst nachträglich in sehr umständlicher und zeitraubender Weise endseitige Anschlusselemente anmontiert werden müssen.

In weiterer vorteilhafter Ausgestaltung der Erfindung werden gemäss Anspruch 2 nach dem Wickeln Teile der Bewicklung im Bereich der Anschlusselemente von diesen wieder entfernt, so dass der Wickelvorgang im Bereich der Anschlusselemente nicht unterbrochen werden muss und es dennoch möglich ist, am fertigen Wickelkörper frei über das Ende der Faserlagen vorstehende Teilabschnitte, z. B. einen Gewindeabschnitt, des Anschlusselements zu erhalten.

Im Hinblick auf eine hochgradig drehmomentensichere Verbindung zwischen Anschlusselementen und Faserlage(n) empfiehlt es sich gemäss Anspruch 3, Anschlusselemente mit polygonalem Querschnitt zu verwenden.

Die Erfindung wird nunmehr anhand der Zeichnungen bespielsweise näher erläutert. Es zeigt:

Fig. 1 einen rohrförmigen, mehrlagigen Wickelkörper mit polygonalem Querschnitt und einem mit dem einen Wickelkörperende integral verbundenen Anschlusselement in Form einer ebenfalls im Querschnitt polygonalen Gleithülse, wobei zur deutlicheren Darstellung des Faserlagenaufbaus die einzelnen Faserlagen schrittweise weiter fortgebrochen sind;

Fig. 2 einen schematischen Längs-Teilschnitt des Wickelkörpers gemäss Fig. 1; und

Fig. 3 eine der Fig. 2 ähnliche Schnittdarstellung eines Wickelkörpers mit einem Anschlusselement in Form eines an den Faserlagen verankerten Gewindezapfens.

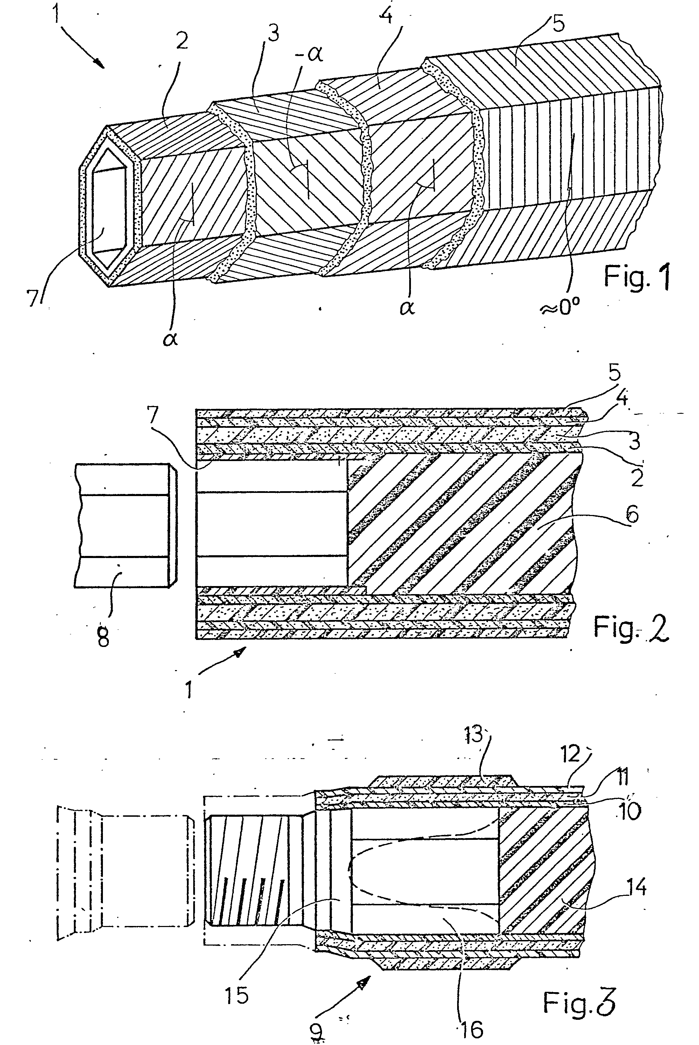

Der in Fig. 1 gezeigte Wickelkörper 1 enthält vier Faserlagen 2, 3, 4 und 5, von denen die innerste und dritte Faserlage 2 und 4 im wesentlichen die gleiche Wandstärke und Faserorientierung (linksgängig, Steigungswinkel $\alpha$) haben, während die zweite Faserlage 3 die doppelte Wandstärke und eine rechtsgängige Faserorientierung (Steigungswinkel $-\alpha$) aufweist und die äusserste Faserlage 5, die eine reine Umfangswicklung ist, um z. B. ein Aufplatzen der inneren Faserlagen 2, 3 und 4 unter Last zu verhindern, einen sehr kleinen Steigungswinkel von nahezu 0 und eine sehr geringe Wandstärke hat, also aus einer oder allenfalls wenigen, übereinanderliegenden Faserschichten besteht und mit einem vergleichsweise schnellrotierenden Spulenträger in einer Rotations-Wickelmaschine hergestellt wird. Als Fasermaterial werden z. B. für sämtliche Faserlagen 2, 3, 4, 5 Glasfasern gewählt, wobei zur weiteren Verstärkung noch zusätzlich zwischen den Faserlagen 4 und 5 oder auf der Innenseite der Faserlage 2 jeweils eine dünne, z. B. einschichtige Carbonfaserlage (nicht gezeigt) angeordnet sein kann, in der die Verstärkungsfasern parallel zur Längsachse des Wickelkörpers 1 verlaufen, also einen Steigungswinkel von 90° haben, was dadurch erreicht wird, dass einer der umlaufenden Spulenträger der Wickelvorrichtung mit Carbongarnspulen besetzt ist und während des Wickelvorgangs stillsteht.

Durch Bewickeln eines im Querschnitt polygonalen Schaumstoff-Innenkerns 6 erhält der Wikkelkörper 1 eine entsprechend polygonale, nämlich sechseckige Querschnittsgeometrie. Vor dem Bewickeln wird der Innenkern 6 mit einem vorgefertigten Anschlusselement versehen, das dann beim Passieren der Wickelmaschine ebenfalls mit den Faserlagen bewickelt wird und einen integralen, tragenden Bestandteil des fertigen Wickelkörpers 1 bildet. Bei dem Wickelkörper 1 gemäss den Fig. 1 und 2 sind die Anschlusselemente als Polytetrafluoräthylen-Hülsen 7 von ebenfalls polygonaler Querschnittsgeometrie wie der Innenkern 6 ausgebildet, und die einzelnen Innenkerne 6 werden über die Hülsen 7 zu einem bewickelbaren Endlosstrang verbunden, der dann in der Wickemaschine durchgehend mit den Faserlagen 2 bis 5 bewickelt wird. Nach dem Aushärten wird der bewickelte Strang im Bereich der Hülsen 7 durchtrennt, und die Hülsen 7 dienen zur gleitend verschieblichen, jedoch drehschlüssigen Koppelung des Wickelkörpers 1 z. B. mit einer Sechskantwelle 8. In dem der Wickelmaschine zugeführten Endlosstrang haben die Hülsenabschnitte doppelte Länge und werden nach dem Aushärten in der Mitte durchtrennt, so dass sie beidseitig der Trennfuge jeweils eine Gleithülse für ein Wickelkörperende bilden.

Der Wickelkörper 9 gemäss Fig. 3 hat eine ebenfalls sechseckige Querschnittsgeometrie und ähnelt in seinem Aufbau hinsichtlich der Faserlagen 10, 11, 12 und 13 und des Schaumstoff-Innenkerns 14 dem Ausführungsbeispiel gemäss den Fig. 1 und 2. Das Anschlusselement ist hier jedoch ein metallischer Gewindezapfen 15 mit einem integral mit dem Wickelkörperende verbundenen Sechskantschaft 16. Die Anschlusselemente werden wiederum als spieglsymmetrisch ausgebildete Doppelelemente vorgefertigt, wie dies in Fig. 3 durch den den zweiten, in gestrichelten Linien dargestellten Gewindezapfen angedeutet ist, und sind im Bereich des Sechskantschaftes 16 mit einer (ebenfalls gestrichelt dargestellten) Ausnehmung versehen, über die sie vor dem Bewickeln mit einer entsprechenden Nase des Schaumstoffs-Innenkerns 14 verbunden werden. Der so gebildete, aus Innenkernen 14 und zwischen diesen eingesetzten Doppelzapfen bestehende Endlosstrang wird dann kontinuierlich bewickelt und nach dem Aushärten längs der Symmetrie-Ebenen der Doppelzapfen durchtrennt, und anschliessend werden die überschüssigen, über den Gewindeabschnitt der Zapfen 15 gewickeleten Faserlagenabschnitte, die in Fig. 3 in gestrichelten Linien gezeigt sind, entfernt.

Ein besonderes Merkmal besteht schliesslich noch darin, dass einzelne Faserlagen während des Wickelvorgangs örtlich aufgedickt bzw. nur streckenweise auf den Innenkern bzw. die vorhergehende Faserlage aufgebracht werden. So erstreckt sich bei dem Wickelkörper 9 die äusserste Faserlage 13 (Umfangwicklung mit einem Steigungswinkel von annähernd 0°) im wesentlichen nur über die Länge des Sechskantschaftes 16, da der Wickelkörper 9 gerade in diesem kritischen Krafteinleitungsbereich einer besonderen, ringförmigen Verstärkung bedarf. Dies wird dadurch erreicht, dass der die Faserlage 13 aufbringende, umlaufende Spulenträger der Wickelmaschine während des Wickelvorganges normalerweise stillsteht und jeweils nur kurzzeitig beim Passieren des entsprechenden Teilstückes des Endlosstranges, also hier des Sechskantschaftes 16, mit entsprechend hoher Drehzahl eingeschaltet wird.

## Patentansprüche

1. Verfahren zum Herstellen von länglichen, insbesondere rohrförmigen, mit mindestens am einen Ende angeordneten Anschlusselementen (7; 15) versehenen Wickelkörpern (1; 9) aus Faserverbundwerkstoff, bei dem die Wickelkörper dadurch hergestellt werden, dass die Anschlusselemente mit einem Innenkern (6; 14) verbunden und gemeinsam mit diesem mit Faserlagen (2 bis 5; 10 bis 13) bewickelt werden, dadurch gekennzeichnet, dass zumindest jeweils zwei, mit je einem Innenkern versehene Anschlusselemente (7; 15) spiegelbildlich miteinander verbunden sind, die über die Anschlusselemente verbundenen Innenkerne (6; 14) in einem Arbeitsgang bewickelt werden und anschliessend eine Trennung in einzelne Wickelkörper (1; 9) erfolgt.

2. Verfahren nach Anspruch 1, dadurch gekennzeichnet, dass nach dem Wickeln Teile der Bewicklung im Bereich der Anschlusselemente (7; 15) von diesen entfernt werden.

3. Verfahren nach Anspruch 1 oder 2, dadurch gekennzeichnet, dass zwecks Drehsicherung Anschlusselemente (7) mit polygonalem Querschnitt Verwendung finden.

## Claims

1. A method of producing elongate, more particulary tubular, wound bodies (1; 9) made from fibre composite material which are provided with connection elements (7; 15) which are arranged at least at one end, in which the wound bodies are produced so that the connection elements are connected to an inner core (6; 14) and jointly with this have wound therearound fibre layers (2 to 5; 10 to 13), characterised in that at least in each case two connection elements (7; 15), each provided with an inner core, are connected together in a mirror-inverted manner, the inner cores (6; 14) connected by way of the connection elements are wound around in one operation and subsquently separation into individual wound bodies (1; 9) is effected.

2. A method according to claim 1, charcterised in that, after the winding around, parts of the winding in the region of the connection elements (7; 15) are removed from these.

3. A method according to claim 1 or 2, characterised in that, for the purpose of protection against torsion, connection elements (7) having polygonal cross-sections are used.

**Revendications**

1. Procédé pour la fabrication de corps bobinés (1; 9) oblongs, en particulier tubulaires, en matériau composite fibreux munis d'éléments de raccordement (7; 15) disposés au moins à une extrémité, dans lequel on fabrique les corps bobinés en reliant les éléments de raccordement à un noyau interne (6; 14) et en bobinant autour en commun avec celui-ci des couches de fibres (2 à 5; 10 à 13), caractérisé par le fait qu'on relie mutuellement et symétriquement à chaque fois au moins deux éléments de raccordement (7; 15) respectivement munis d'un noyau interne, qu'on procède en une seule opération au bobinage autour des noyaux internes (6; 14) reliés par les éléments de raccordement et qu'ensuite on les sépare en différents corps bobinés (1; 9).

2. Procédé selon la revendication 1, caractérisé par le fait qu'après le bobinage, des parties de l'enroulement dans la zone des éléments de raccordement (7; 15) sont enlevés de ceux-ci.

3. Procédé selon la revendication 1 ou 2, caractérisé par le fait que pour la fixation en rotation, on utilise des éléments de raccordement (7) de section polygonale.

0012826

Fig. 1

Fig. 2

Fig. 3